# Europäisches Patentamt

# European Patent Office

# Office européen des brevets

(11) Numéro de publication: **0 203 846 B1**

(12) **FASCICULE DE BREVET EUROPEEN**

(45) Date de publication du fascicule du brevet:
12.09.90

(51) Int. Cl.⁵: **H02K 29/08, H02K 5/128**

(21) Numéro de dépôt: 86401024.4

(22) Date de dépôt: 13.05.86

(54) Machine multipolaire à courant continu pour utilisation en immersion.

(30) Priorité: 14.05.85 FR 8507306

(43) Date de publication de la demande:
03.12.86 Bulletin 86/49

(45) Mention de la délivrance du brevet:
12.09.90 Bulletin 90/37

(84) Etats contractants désignés:
AT BE CH DE FR GB IT LI LU NL SE

(56) Documents cités:
CH-A- 472 581
DE-A- 1 525 216
DE-A- 3 245 033
FR-A- 879 428
FR-A- 2 197 419
FR-A- 2 224 913
GB-A- 2 116 373
US-A- 2 669 667
US-A- 2 761 985
US-A- 2 809 590
US-A- 3 218 490
US-A- 3 377 534
US-A- 4 329 122

(73) Titulaire: ELENE S.A., 25, rue Jean Giraudoux,
F-75116 Paris(FR)

(72) Inventeur: Nathan, Guy, 12 Avenue Victor Hugo,
F-92170 Vanves(FR)
Inventeur: Jacob, Maurice, 4, Chemin du Bois Prieur,
F-77680 Roissy en Brie(FR)
Inventeur: Ricoux, Philippe, 35, Boulevard de l'Europe,
F-69600 Oullins(FR)

(74) Mandataire: Debay, Yves et al, 122 Elysee 2, F-78170 La
Celle Saint Cloud(FR)

## Description

La présente invention concerne une machine multipolaire à courant continu pour utilisation en immersion dans n'importe quel milieu liquide.

Il est déjà connu des moteurs qui peuvent être utilisés dans des forages. Ces moteurs, en général, sont étanches et présentent un arbre d'entraînement qui nécessite la présence de joints d'étanchéité. Ces joints d'étanchéité ont pour inconvénient, d'une part d'absorber une partie de l'énergie fournie par le moteur et d'autre part de s'user. Une deuxième solution consiste à réaliser un ensemble moteur totalement étanche, comportant à son extrémité un coupleur magnétique. Cette solution est onéreuse et le coupleur magnétique présente l'inconvénient d'exercer des efforts mécaniques sur les pièces par l'attraction de l'aimant. De plus, lorsque l'on veut transmettre une certaine puissance par couplage magnétique, le coupleur atteint de telles dimensions que la friction du coupleur dans l'eau est très importante et bien souvent, on est limité par les dimensions du forage.

Il est également connu par le brevet français 2 197 419 une pompe à moteur immergé dont le moteur comprend une partie tournante constituée d'un inducteur à pôles multiples formant l'arbre d'entraînement, une partie fixe comprenant un induit cylindrique entourant ledit inducteur et dont le bobinage est partagé en un nombre de sections alimentées par une source d'énergie électrique dont la commutation est commandée par effet hall.

Toutefois ce brevet enseigne un inducteur à six pôles ce qui oblige le circuit de commutation à alimenter les bobinages de l'induit selon des circuits qui ne sont ni parallèles, ni symétriques et qui de ce fait n'intéressent pas la totalité du bobinage. Or dans l'utilisation d'un moteur pour l'entraînement d'une pompe immergée, on est d'une part limité par les dimensions du forage et, d'autre part on cherche à transmettre une puissance déterminée qui, dans certains cas, peut devenir la puissance maximum que peut fournir un moteur de dimension donnée.

Par ailleurs, le moteur enseigné par ce brevet comporte, pour constituer l'étanchéité de sa partie fixe, une cloison annulaire qui définit, avec une partie et un manchon cylindrique un compartiment étanche. La présence du manchon cylindrique présente l'inconvénient d'augmenter l'entrefer entre les bobines de stator et l'inducteur.

Toutefois ce document n'enseigne pas le surmoulage qui permet de réduire l'épaisseur du manchon permettant de réaliser l'étanchéité.

Il est également connu par le brevet américain 2 761 985 d'entourer un stator par deux cylindres coaxiaux en acier inoxydable dans lesquels on coule une résine de façon à assurer l'étanchéité du stator.

Toutefois ce document n'enseigne pas l'association d'un tel stator avec un circuit de commutation à effet Hall pour commander l'alimentation des enroulements.

Un but de l'invention est donc de proposer un moteur étanche à circuit de commutation incorporé dont l'étanchéité du stator est assurée par un surmoulage et dans lequel toutes les mesures ont été prises pour, d'une part dans une dimension de diamètre de forage donné, d'autre part pour une longueur de moteur déterminée, arriver à obtenir une puissance maximale délivrée et enfin réduire au maximum le couple de démarrage nécessaire pour vaincre les frottements.

L'invention consiste également à réaliser un moteur immergeable, dans lequel on a cherché à diminuer au maximum les frottements entre les pièces mobiles et les pièces fixes.

Ce but est atteint par le fait que la machine multipolaire à courant continu fonctionnant en immersion dans un fluide comprenant un inducteur qui constitue l'arbre d'entraînement tournant, une partie fixe comprenant un induit cylindrique entourant ledit inducteur et dont le bobinage est partagé en un nombre pair de sections reliées entre elles et alimentées par une source d'énergie électrique, un circuit électronique étanche de commutation électrique, commandé par des capteurs et assurant une circulation du courant dans le bobinage en fonction de la rotation de l'inducteur détectée par des capteurs lors du passage devant les capteurs fixes d'un élément d'excitation solidaire en rotation de l'inducteur, la partie fixe de la machine formant un ensemble totalement étanche aux fluides qui est séparé de la partie tournante par au moins une fine pellicule du fluide dans lequel est immergée la machine, est caractérisée en ce que l'induit est gainé intérieurement et extérieurement par des tubes de chemisage et remplis sous vide avec une résine, le circuit électronique assurant l'alimentation de toutes les sections du bobinage en au moins deux points diamétralement opposés suivant deux circuits parallèles et symétriques intéressant toutes les sections du bobinage et assurant une rotation des points d'alimentation des sections du bobinage, les parties tournantes, inducteur, arbre d'entraînement sont montées en rotation sur la partie fixe au moyen de paliers disposés à proximité de chaque extrémité de l'induit, d'une butée principale à film de fluide et d'une butée auxiliaire disposée à une extrémité de la machine, réalisant un contact ponctuel suivant l'axe de symétrie de la machine, chaque palier comportant un coussinet et un tourillon légèrement bombé et monté dans le coussinet avec un jeu assurant la création d'un film de fluide.

Selon une autre caractéristique de l'invention, l'extrémité de l'induit cylindrique comporte des moyens de connexion répartis sur une circonférence de l'induit et deux gorges concentriques de part et d'autre des moyens de connexion, ces gorges recevant deux joints toriques qui assurent l'étanchéité des moyens de connexion entre l'induit étanche et le circuit électronique étanche.

Selon une autre caractéristique, la butée principale est composée de deux couronnes, l'une fixe, l'autre mobile et comportant des rainures curvilignes régulièrement réparties et orientées de façon à assurer le création d'un film de fluide.

Selon une autre caractéristique, chaque palier comporte un coussinet et un tourillon légèrement bombé, monté dans le coussinet avec un jeu assurant la création d'un film de fluide.

Un autre but pourrait être de constituer un moteur pouvant fonctionner avec une alimentation photovoltaïque et par conséquent ne nécessitant pas des courants importants lors des démarrages, puisqu'une telle alimentation est limitée en courant.

Cet autre but pourrait être atteint par le fait, qu'en plus des moyens permettant la diminution des frottements, l'induit est constitué d'un empilage de tôles à faible perte comportant des encoches, les différentes tôles étant décalées progressivement et régulièrement en rotation les unes par rapport aux autres suivant une hélice, de façon qu'une encoche de la tôle supérieure soit décalée d'une valeur angulaire correspondant à l'écart entre deux encoches par rapport à l'encoche correspondante de la tôle inférieure de l'empilage.

Un autre but pourrait être de réaliser un moteur permettant une intervention facile sur l'électronique de commande.

Cet autre but pourrait être atteint par le fait que les câbles d'alimentation et de commande de la mise en route de la machine traversent l'induit vers l'ensemble électronique dans deux encoches différentes, l'une étant traversée par les deux conducteurs destinés à l'alimentation de puissance, l'autre étant traversée par les trois conducteurs nécessaires à l'alimentation de commande et de sécurité, l'électronique étant disposée à proximité de l'extrémité opposée à l'extrémité d'entraînement de l'arbre.

Un autre but pourrait être de réaliser un moteur à performance adaptable.

Cet autre but pourrait être atteint par le fait que l'inducteur est constitué d'éléments modulaires, empilés sur l'arbre suivant la puissance souhaitée, puis gainés par un tube de chemisage et remplis de résine.

D'autres avantages de la présente invention apparaîtront à la lecture de la description ci-après, faite en référence aux dessins annexés dans lesquels :

La figure 1 est une vue en coupe longitudinale de la machine.

La figure 2 est une vue en coupe suivant l'axe EE de l'inducteur de la machine.

La figure 3 est une vue latérale du flasque de connexion entre l'induit et le circuit électronique de la machine.

La figure 4 est une vue latérale du flasque situé à proximité de l'extrémité d'entraînement de l'arbre de la machine.

La figure 5 est une vue en perspective des tôles constituant l'induit de la machine.

La figure 6 est une vue schématique représentant le principe d'alimentation des bobinages de l'induit par le circuit de communication électrique.

La figure 7 est une vue en coupe des tourillons constituant les palier de la machine.

La figure 8 est une vue de dessous de la bague tournante constituant une butée de la machine.

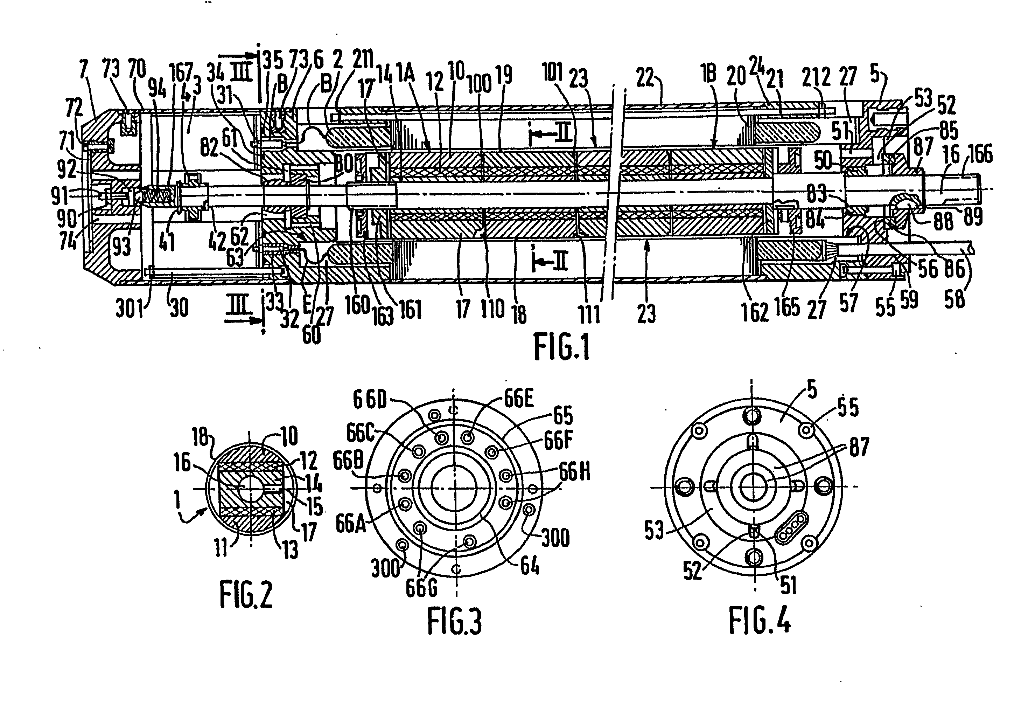

La description de la machine va maintenant être faite en relation avec les figures 1 à 8. L'induit de la machine est constitué par un empilage de tôles (20), ces tôles comportent un certain nombre d'encoches (25), de préférence 12, dans lesquelles on fait passer le bobinage de l'induit.

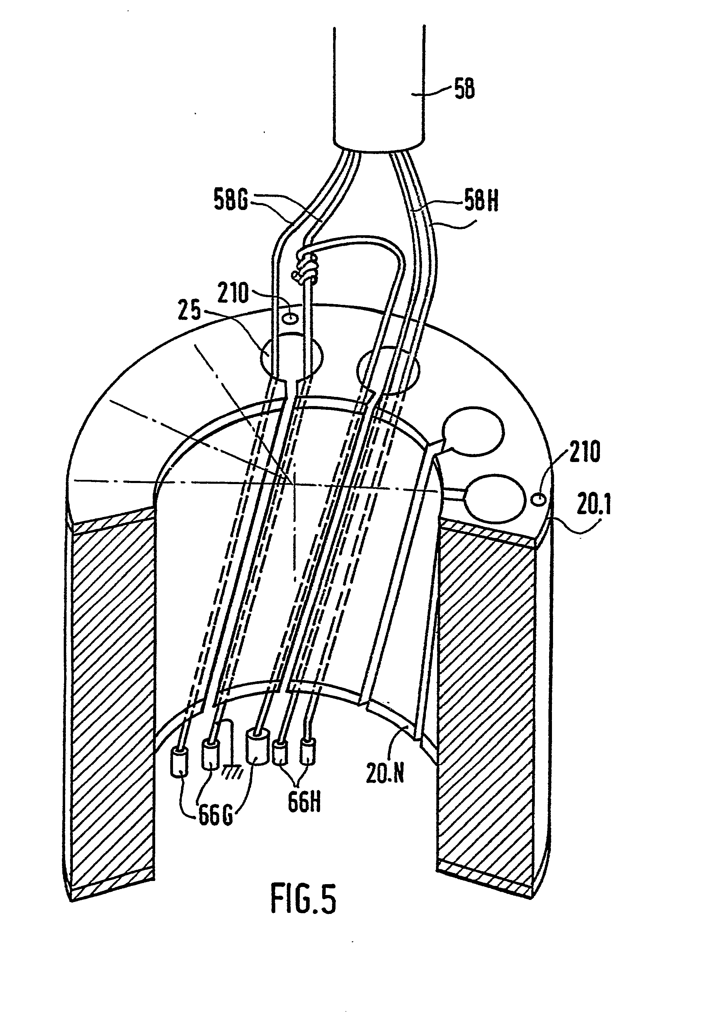

Comme on peut le voir à la figure 5, la première tôle (20.1) est décalée en rotation par rapport à la dernière tôle (20.N), de façon à ce qu'une encoche de la tôle (20.1) soit dans l'alignement de l'encoche adjacente de la tôle (20.N). De cette façon, les encoches sont réparties le long d'une hélice. Dans l'alésage cylindrique formé par l'empilage des tôles, on glisse un tube de chemisage intérieur (23) en matériau amagnétique, non conducteur, inattaquable par le fluide d'immersion et imputrescible. Ce matériau peut, à titre d'exemple, être du verre cd. De même, l'ensemble, empilage de tôles-bobinage, est chemisé par un tube extérieur (22) en matériau inattaquable et imputrescible par le fluide d'immersion, tel que, par exemple du verre époxy. L'extrémité de l'induit orientée vers l'extrémité de l'arbre d'entraînement (16) comportant une surface d'entraînement (166) est fermée par un flasque (24) en résine. Ce flasque (24) est centré sur le tube extérieur (22) en verre époxy.

A l'extrémité opposée de l'induit se trouve un flasque (6) en résine, centré, d'une part sur le tube externe (22), et d'autre part, par un épaulement (63) sur le tube interne (23) en verre époxy. Ce flasque (6) comporte un alésage (62) permettant d'accueillir le coussinet (80) d'un palier. L'alésage (62) communique par une gorge annulaire (61) et des perçages (60), disposés régulièrement répartis à la périphérie de l'épaulement supportant le coussinet (80). Des tiges (21), réparties régulièrement à la périphérie et passant dans les trous (210, figure 5) des tôles (20) permettent d'assurer, au moyen d'une rondelle (211) et d'un écrou (212), le serrage de l'ensemble constitué par l'induit, la chemise intérieure (23) la chemise extérieure (22) ; le flasque avant (24) et le flasque porte-paliers (6) jusqu'au moment où on injecte sous vide une résine (27) telle que par exemple du polyuréthane qui se polymérise et remplit tous les interstices.

La face arrière du flasque porte-palier (6), orientée vers le circuit électronique de commutation (3) comporte sur sa périphérie un certain nombre de perçages (66A à 66H) permettant le passage des fils de connexion aux différents points d'alimentation du bobinage (A à F). Ces perçages (66 A à 66 H) reçoivent une cosse de connexion femelle (32) immobilisée dans un matériau (33) présentant une certaine élasticité de façon à permettre un certain rattrapage de jeu dans les erreurs de positionnement des connexions femelles (32) par rapport aux connexion mâles (31) du boîtier électronique de commutation (3). Les perçages (66 A à 66 H), figure 3) sont disposés sur une circonférence et de part et d'autre de cette circonférence le flasque (6) comporte une gorge annulaire extérieure (65) et une gorge annulaire intérieure (64) qui permettent la réception des joints toriques respectifs (35, 34). Ces joints toriques assurent l'étanchéité au niveau des moyens de connexion entre l'induit rendu totalement étanche par l'injection de la résine (27) de l'induit et le circuit électronique (3) noyé dans un tube cylindrique de résine. Le circuit (3) est maintenu serré contre le flasque porte-palier (6) par des tiges filetées (30) se vissant dans les alésages (300, figure 3) du flasque porte-palier (6) et comportant à l'autre extrémité un écrou (301).

Enfin, un flasque porte-butée (7), également réalisé en résine, vient se centrer par un épaulement sur un tube (70) de même matière que le tube extérieur (22), tube qui est fixé par son autre extrémité au flasque porte-palier (6). Ce tube (70) est maintenu solidaire des flasques (6) et (7) par des vis (73). Le flasque (7) comporte des perçages (74) assurant le passage du fluide (en l'occurence l'eau) à l'intérieur du moteur. Une grille (71) maintenue par des vis (72) devant les perçages (74) permet d'assurer une retenue des grosses particules qui sont en suspension dans l'eau du forage. Une plaque circulaire (92), disposée dans un trou borgne du flasque (7) est poussée sur une face par une vis (90) dont le réglage est bloqué par un contre-écrou (91). Sur l'autre face de la plaque, réalisée de façon avantageuse en carbure de tungstène (92) prend appui une bille (93) disposée dans un logement creux (167) de l'arbre d'entraînement (16), cette bille (93) est maintenue en poussée vers l'extérieur de ce logement par un ressort (94).

Une rondelle élastique (41) et une goupille (42) assurent le maintien en rotation et en déplacement sur l'arbre (16) d'un élément d'excitation (4) qui permet d'exciter au cours de la rotation de l'arbre des capteurs non représentés, figurant dans le boîtier électronique (3).

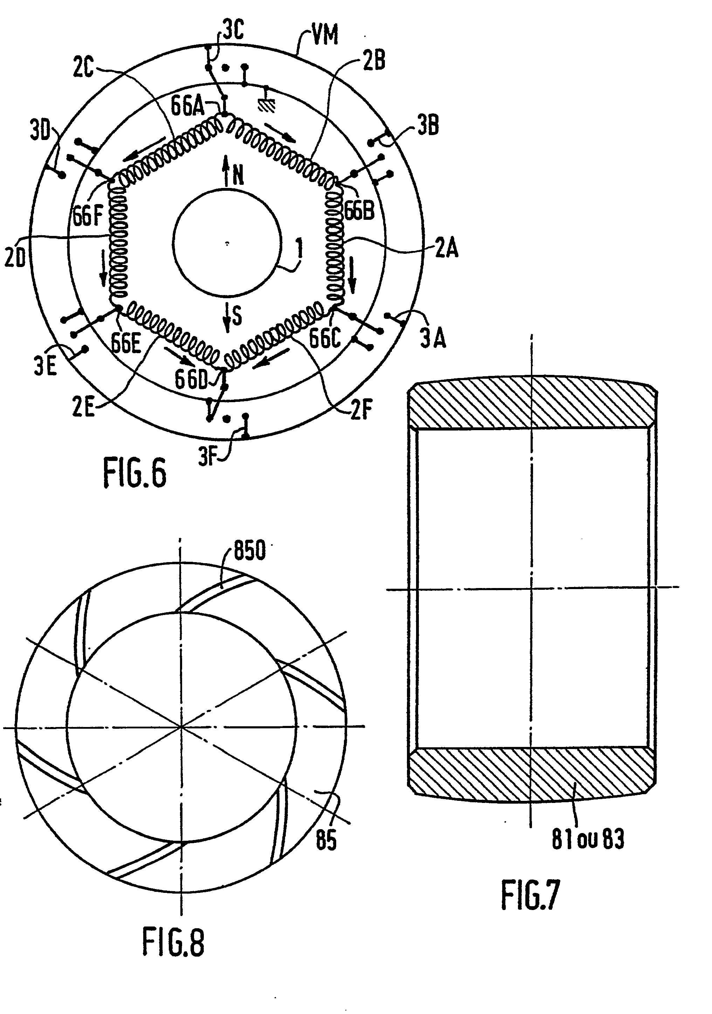

Dans le mode de réalisation représenté, l'élément d'excitation est un aimant tandis que les capteurs sont des capteurs à effet Hall. Il est bien évident que l'on pourrait utiliser tout autre couple comme moyen de détection de la position en rotation de l'inducteur. Une bague cônique (82) disposée sur l'arbre (16) permet de faciliter l'introduction et le passage de cet arbre dans le coussinet (80) du palier arrière. Un tourillon (81) monté sur l'arbre (16) est maintenu par une rondelle élastique (168) pour empêcher les déplacements longitudinaux. Ce tourillon, emmanché en force sur l'arbre, présente, comme on peut le voir à la figure 7, une surface orientée vers le coussinet (80) qui est légèrement bombé. Le moteur comporte, au droit de l'induit fixe (2), un inducteur tournant, (1) constitué par un ensemble modulaire d'aimants (1 A, 1 B). Chaque module est constitué par un noyau central (14) maintenu sur l'arbre (16) par une vis de fixation (15, figure 2). Ce noyau central (14) est entouré de part et d'autre par deux plaques aimantées (12, 13) réalisées de façon avantageuse en samarium-cobalt ou en ferrite. De chaque côté des plaques (12, 13), se trouvent des masses polaires respectivement (10, 11) constituées par des portions de cylindre. Ces masses polaires comportent sur une de leurs faces des nervures (100, 110) et sur la face opposée un épaulement (101, 111) ; les nervures d'un ensemble modulaire s'emboîtent dans les épaulements de l'ensemble modulaire précédent, de façon à constituer sur l'arbre (16) un ensemble rigide. Cet ensemble modulaire est serré contre une butée (162) par un écrou (161) vissé sur un filetage (160) de l'arbre d'entraînement (16). Le nombre de modules utilisés pour constituer l'inducteur dépendra de la puissance que l'on souhaite obtenir sur l'extrémité d'entraînement (166) de l'arbre (16). Ensuite, on enfile sur l'ensemble inducteur un tube (18) réalisé dans le même matériau que le tube de chemisage intérieur (23) et on injecte sous vide une résine (17), par exemple du polyuréthane, qui permet d'obtenir un ensemble inducteur totalement étanche et mettant les différentes parties métalliques de l'inducteur à l'abri du contact de l'eau. Le serrage par un écrou (161) et l'assemblage par rainure et épaulement des différents modules permet de conférer à l'ensemble inducteur-arbre une plus grande rigidité. Cette rigidité est nécessaire pour supporter sans déformation les flux importants qui se développent dans le moteur. Un léger intervalle (19) permet le passage du liquide qui provient des canaux (60, 61, 62) et des canaux (74). De façon classique, des flasques d'équilibrage (163) sont disposés de part et d'autre de l'inducteur. Un flasque avant porte-palier et porte-butée (5) supporte dans un épaulement (50) un coussinet (84) du palier avant et dans une gorge (56) une couronne circulaire (86). Ce flasque (5) est centré par un épaulement (57) sur le tube interne (23) de l'induit. Le flasque comporte, à la périphérie de l'épaulement (50), des perçages (51) débouchant par des canaux (52), d'une part, dans une gorge intérieure (54), d'autre part, dans une gorge extérieure (53) communiquant avec le liquide du forage. Le tourillon bombé (83) est monté en force contre un épaulement (164) de l'arbre (16). Une bague (87) support de butée est montée au moyen d'une rondelle élastique (89) sur l'arbre (16) et solidarisée en rotation avec ce dernier par une clavette (88). Cette bague (87) supporte la couronne annulaire constituant la contre-butée. Cette contre-butée (85) comporte, comme représenté à la figure 8, un ensemble de rainures circulaires (850) orientées convenablement par rapport au centre de rotation de l'arbre, de façon à constituer avec la surface plane de la couronne (86) une pompe assurant le passage du liquide du volume (54) vers l'extérieur (53) du moteur. Le flasque (5) est solidarisé au flasque (24) par un ensemble de vis (55). Un câble étanche (58) traverse le flasque (5) dans un perçage (59), puis passe dans la résine moulée (27) et se divise en deux conducteurs d'alimentation (58 G) et trois conducteurs de commande et de sécurité (58 H) pour passer dans des encoches différentes du bobinage, de façon à ressortir sur le flasque (6) par des moyens de connexion (66 G et 66 H) pour assurer l'alimentation et la commande de mise en route. Une isolation galvanique (non représentée) des circuits assure une annulation des perturbations dans le circuit de commande. Comme représenté figure 5, une encoche est traversée par les deux conducteurs d'alimentation de puissance (58 G) et l'autre encoche est traversée par les trois conducteurs (58 H) de commande et de sécurité, parmi lesquels celui représentant la masse est relié au conducteur représentant la masse de l'alimentation de puissance avant le passage dans les encoches du bobinage. La vis de réglage (91) de la butée ponctuelle (92, 93), située dans le prolongement de l'axe de symétrie de l'inducteur, permet de régler la force de poussée de cette butée sur l'ensemble mobile, de façon à ce que cette force compense le poids de l'ensemble mobile et assure un jeu de l'ordre du centième de millimètre entre les surfaces de la butée (85, 86) lorsque l'arbre est à l'arrêt. Par ailleurs, lorsque l'arbre est à l'arrêt, les surfaces bombées des paliers avant (83, 84) et arrière, (80, 81) permettent d'assurer un contact pratiquement ponctuel entre le tourillon et le coussinet de ces paliers. D'autre part, le jeu de l'ordre du centième de millimètre entre le tourillon et le coussinet permet de s'assurer que, lors de la rotation de l'arbre, un film de fluide se forme entre le tourillon et le coussinet de chaque palier. Enfin, le bombage des tourillons permet de rattraper les défauts d'alignement entre les flasques porte-coussinet. La figure 6 représente l'induit (2), constitué par un enroulement statorique qui, dans l'exemple de réalisation, est divisé en six parties égales (2 A, 2 B, ... 2 F) reliées, par l'intermédiaire de six interrupteurs (3 A à 3 F) à une source de tension $V_M$.

Chaque interrupteur peut prendre trois états :
- état 0 : interrupteur non connecté
- état +1 : liaison à + $V_M$
- état -1 : liaison à la masse.

Le courant circule dans le moteur par l'intermédiaire de deux interrupteurs diamétralement opposés et simultanément dans des états +1 et -1 respectivement.

Une rotation du rotor de 360 degrés dans un sens donné supposera donc six phases successives comprenant chacune une double commutation selon le schéma ci-après :

| Interrupteurs : | 3A | 3B | 3C | 3D | 3E | 3F |
|---|---|---|---|---|---|---|
| 1ère phase : | -1 | 0 | 0 | +1 | 0 | 0 |
| 2ème phase : | 0 | -1 | 0 | 0 | +1 | 0 |
| 3ème phase : | 0 | 0 | -1 | 0 | 0 | +1 |
| 4ème phase : | +1 | 0 | 0 | -1 | 0 | 0 |
| 5ème phase : | 0 | +1 | 0 | 0 | -1 | 0 |
| 6ème phase : | 0 | 0 | +1 | 0 | 0 | -1 |

Ainsi, dans la sixième phase, (3C) est relié, par exemple, à la tension + VM, et (3F) à la tension -VM, assurant alors le passage du courant dans tout le bobinage suivant deux chemins parallèles et symétriques, (2C, 2D, 2E) respectivement (2B, 2A, 2F).

Le changement du sens de rotation sera obtenu par rotation de la came de 180° par rapport à l'inducteur et la logique de fonctionnement correspond au tableau suivant :

| Interrupteurs : | 3A | 3B | 3C | 3D | 3E | 3F |
|---|---|---|---|---|---|---|
| 1ère phase : | 1 | 0 | 0 | -1 | 0 | 0 |
| 2ème phase : | 0 | 1 | 0 | 0 | -1 | 0 |
| 3ème phase : | 0 | 0 | 1 | 0 | 0 | -1 |
| 4ème phase : | -1 | 0 | 0 | 1 | 0 | 0 |
| 5ème phase : | 0 | -1 | 0 | 0 | 1 | 0 |
| 6ème phase : | 0 | 0 | -1 | 0 | 0 | 1 |

La détection de la position de l'aimant (4), rotor, par rapport au stator, permet au circuit électronique (3) de donner les ordres de commutation au moment voulu. La vitesse de rotation est proportionnelle à la tension d'alimentation $V_M$, le couple uniforme est proportionnel au courant, ce qui répond aux équations du moteur à courant continu à excitation constante.

Dans le présent exemple de réalisation, la détection est effectuée à l'aide de six capteurs à effet Hall disposés régulièrement autour de l'axe de l'arbre (16), la came (4) est un secteur magnétique ayant un angle égal à 60 degrés.

Les interrupteurs (3 A à 3 F) sont commandés en fonction de la position de la came (4) par rapport aux capteurs à effet Hall qui sont inclus dans le circuit électronique de commutation (3). Ce genre de circuit de commutation, pour alimenter les points de contacts de l'enroulement statorique d'un moteur, est bien connu de l'homme de métier et ne sera pas décrit plus en détails. Toutefois, pour de plus amples renseignements, on pourra se référer au brevet américain 3 364 407. Dans une variante de réalisation de l'invention on pourrait très bien concevoir un bobinage comportant seulement quatre points d'alimentation associés à quatre interrupteurs inverseurs et quatre capteurs à effet Hall. Les éléments des butées et des paliers sont constitués de façon avantageuse en carbure de tungstène, l'arbre (16) est constitué de façon avantageuse d'un acier inoxydable austénitique à haute résistance et amagnétique.

On remarquera que le moteur ainsi constitué permet de réduire les pertes par frottement, d'une part parce que les pièces en contact avec le liquide sont les tubes de chemisage qui ont des surfaces lisses en contact avec le liquide et d'autre part parce que tout a été mis en oeuvre au niveau des paliers et des butées pour réduire ces frottements.

Enfin, le fait de disposer les encoches des tôles de l'induit suivant une hélice permet de réduire l'effet de denture de cet induit et par suite de diminuer le courant de démarrage du moteur.

Ainsi dans le cas de l'utilisation du moteur avec un pompe volumétrique, la butée principale (85, 86) retenant la poussée axiale est inutile.

## Revendications

1. Machine multipolaire à courant continu fonctionnant en immersion dans un fluide comprenant un inducteur (1) qui constitue l'arbre d'entraînement tournant, une partie fixe comprenant un induit (2, 20, 22, 23, 27) cylindrique entourant ledit inducteur (1) et dont le bobinage est partagé en un nombre pair de sections (AB, BC, CD, DE, EF, FA) reliées entre elles et alimentées par une source d'énergie électrique, un circuit électronique (3) étanche de commutation électrique, commandé par des capteurs et assurant une circulation du courant dans le bobinage en fonction de la rotation de l'inducteur (1) détectée par des capteurs lors du passage devant les capteurs fixes d'un élément d'excitation (4) solidaire en rotation de l'inducteur, la partie fixe de la machine formant un ensemble totalement étanche aux fluides qui est séparé de la partie tournante par au moins une fine pellicule du fluide dans lequel est immergée la machine, caractérisée en ce que l'induit est gainé intérieurement et extérieurement par des tubes de chemisage (23, 22) et remplis sous vide avec une résine (27), le circuit électronique (3) assurant l'alimentation de toutes les sections du bobinage en au moins deux points diamètralement opposés suivant deux circuits parallèles et symétriques intéressant toutes les sections du bobinage et assurant une rotation des points d'alimentation des sections du bobinage, les parties tournantes, inducteur (1), arbre d'entraînement (16) sont montées en rotation sur la partie fixe au moyen de paliers (80, 81, 83, 84) disposés à proximité de chaque extrémité de l'induit, d'une butée principale (85, 86) à film de fluide et d'une butée auxiliaire (90, 91, 92, 93, 94) disposée à une extrémité de la machine, réalisant un contact ponctuel suivant l'axe de symétrie de la machine, chaque palier (80, 81, 83, 84) comportant un coussinet (80, 84) et un tourillon (81, 83) légèrement bombé et monté dans le coussinet avec un jeu assurant la création d'un film de fluide.

2. Machine selon la revendication 1, caractérisée en ce que l'inducteur est constitué d'éléments modulaires (1A, 1B) empilés sur l'arbre (16) suivant la puissance souhaitée, puis gainé par un tube (18) rempli de résine (17).

3. Machine selon la revendication 1, caractérisée en ce que l'extrémité de l'induit cylindrique comporte des moyens de connexion (32A à 32H) répartis sur une circonférence de l'induit et deux gorges concentriques (65, 64) de part et d'autre des moyens de connexion, ces gorges recevant deux joints toriques (34, 35) assurant l'étanchéité des moyens de connexion entre l'induit étanche et le circuit électronique étanche (3).

4. Machine selon la revendication 3, caractérisée en ce qu'au moins l'un des éléments mâles ou femelles des moyens de connexion (32) est monté dans un matériau déformable (33) de façon à permettre un rattrapage de jeu ou d'erreur de positionnement.

5. Machine selon la revendication 1, caractérisée en ce que des moyens règlables (91, 90) permettent d'exercer une poussée axiale sur la partie mobile, destinée à compenser, à l'arrêt, le poids de la partie mobile et éviter le contact entre les surfaces de la butée principale (85, 86).

6. Machine selon la revendication 1, caractérisée en ce que la butée principale (85, 86) est composée de deux couronnes, l'une fixe, l'autre mobile et comportant des rainures curvilignes (850) régulièrement réparties et orientées de façon à assurer la création du film de fluide.

7. Machine selon une des revendications précédentes, caractérisée en ce que l'induit est constitué d'un empilage de tôles (20) à faible perte, comportant des encoches (25), les différentes tôles (20.1, 20N) étant décalées progressivement et régulièrement en rotation les unes par rapport aux autres suivant une hélice de façon qu'une encoche de la tôle supérieure (20.1) soit décalée d'une valeur angulaire correspondant à l'écart entre deux encoches par rapport à l'encoche correspondante de la tôle inférieure (20.N) de l'empilage.

8. Machine selon la revendication 7, caractérisée en ce que les câbles (58) d'alimentation (58G) et de commande de la mise en route (58H) de la machine traversent l'induit vers le circuit électronique (3) dans deux encoches différentes, l'une étant traversée par les deux conducteurs (58G) destinés à l'alimentation de puissance, l'autre étant traversée par les trois conducteurs (58H) nécessaires à l'alimentation de commande et de sécurité, le circuit électronique (3) étant disposé à proximité de l'extrémité opposée à l'extrémité (166) d'entraînement de l'arbre (16).

9. Machine selon la revendication 2, caractérisée en ce que chaque élément modulaire comprend un noyau (14) en acier doux, deux plaques (12, 13) d'aimant permanent et deux masses polaires (10, 11) en acier doux comportant à leur périphérie, sur une face une nervure (110) et sur la face opposée un épaulement (111) permettant la réception d'une nervure (110) d'une autre masse polaire (10 ou 11).

10. Machine selon la revendication 1, caractérisée en ce que les paliers et butées sont réalisés en carbure de tungstène.

## Claims

1. Direct current multipole machine immersed in a fluid comprising an inductor (1) constituting the rotary driving shaft, a fixed part comprising a cylindrical armature (2, 20, 22, 23, 27) surrounding said inductor (1) and whose coil is subdivided into an even number of interconnected sections (AB, BC, CD, DE, EF, FA) supplied by an electric power supply, a tight electrical switching electronic circuit (3) controlled by sensors and ensuring a current flow in the coil as a function of the rotation of the inductor (1) detected by sensors during passage in front of the fixed sensors of an exciting element (4) integral in rotation with the inductor (1), the fixed part of the machine forming a completely fluid-tight assembly, which is separated from the rotary part by at least one fluid film in which is submerged the machine, characterized in that the armature is internally and externally sheathed by lining tubes (23, 22) and filled under vacuum with a resin (27), the electronic circuit (8) supplying all the sections of the coil at at least two diametrically opposite points with two parallel, symmetrical circuits and covering all the sections of the coil and ensuring a rotation of the supply points of the coil sections, the rotary parts, the inductor (1) and the driving shaft (16) being mounted in rotation on the fixed part by means of bearings (80, 81, 83, 84) in the vicinity of each end of the armature, a main fluid film abutment (85, 86) and an auxiliary abutment (90, 91, 92, 93, 94) located at one end of the machine effecting a punctiform contact along the axis of symmetry of the machine, each bearing (80, 81, 83, 84) having a bush (80, 84) and a slightly convex journal (81, 83) mounted in the bush with a clearance ensuring the formation of a fluid film.

2. Machine according to claim 1, characterized in that the inductor is constituted by modular elements (1A, 1B) stacked on the shaft (16) as a function of the desired power and then sheathed by a tube (18) filled with resin (17).

3. Machine according to claim 1, characterized in that the end of the cylindrical armature has connecting means (32A to 32H) distributed over a circumference of the armature and two concentric grooves (65, 64) on either side of the connection means, said grooves receiving two O-rings (34, 35) ensuring the sealing of the connection means between the tight armature and the tight electronic circuit (3).

4. Machine according to claim 3, characterized in that at least one of the male or female elements of connection means (32) is mounted in a deformable material (33), so that any positioning error or clearance can be made up.

5. Machine according to claim 1, characterized in that regulatable means (91, 90) make it possible to exert an axial thrust on the mobile part and serving to compensate, on stopping, the weight of the mobile part and prevent contact between the surfaces of the main abutment (85, 86).

6. Machine according to claim 1, characterized in that the main abutment (85, 86) is formed by two rings, one being fixed and the other mobile and having curvilinear recesses (850) regularly distributed and oriented so as to ensure the formation of the fluid film.

7. Machine according to one of the preceding claims, characterized in that the armature is constituted by a low loss sheet stack (20) having notches (25), the different sheets (20.1, 20N) being progressively and regularly displaced in rotation with respect to one another in accordance with a helix, in such a way that a notch of the upper sheet (20.1) is displaced by an angular value corresponding to the variation between two notches with respect to the corresponding notch of the lower sheet (20.N) of the stack.

8. Machine according to claim 7, characterized in that the supply cables (58G) and starting control cables (58H) of the machine traverse the armature up to the electronic circuit (3) in two different notches, one being traversed by the two conductors (58G) for power supply purposes and the other is traversed by the three conductors (58H) necessary for the control and security supply, the electronic circuit (3) being positioned in the vicinity of the end opposite to the driving end (166) of shaft (16).

9. Machine according to claim 2, characterized in that each modular element comprises a soft steel core (14), two permanent magnet plates (12, 13) and two soft steel polar masses (10, 11) having on their periphery a rib (110) on one face and a shoulder (111) on the opposite face permitting the reception of a rib (110) of another polar mass (10 or 11).

10. Machine according to claim 1, characterized in that the bearings and abutments are made from tungsten carbide.

## Patentansprüche

1. Multipolare Gleichstrommaschine mit Immersion innerhalb eines Mediums, bestehend aus einem auf der angetriebenen Welle befestigten Induktionselement (1) sowie einem unbeweglichen Teil mit einem das Induktionselement (1) umgebenden zylindrischen Induktor (2, 20, 22, 23, 27), dessen Wicklung in eine gerade Anzahl von untereinander verbundener Wicklungsabschnitten (AB, BC, CD, DE, EF, FA) aufgeteilt ist, die von einer Energiequelle gespeist sind, sowie einem der elektrischen Kommutation dienenden, von entsprechenden Sensoren gesteuerten elektronischen Kreis (3), welcher in Abhängigkeit der Rotation des Induktionselementes (1) entsprechend dem Ansprechen der starr angeordneten Sensoren auf Grund eines einzelnen in Rotation befindlichen Erregungselementes (4) eine gewünschte Stromzirkulation innerhalb der Wicklung gewährleistet, wobei der unbewegliche Teil der Maschine eine gegenüber Medien vollkommen abgedichtete Anordnung bildet, welche gegenüber dem rotierenden Teil wenigstens über eine dünne Schicht des Mediums getrennt ist, innerhalb welcher die Maschine eingetaucht ist, dadurch gekennzeichnet, daß der Induktor von innen und außen her von Mantelrohren (23, 22) umgeben ist und unter Vakuum mit einem Harz (27) gefüllt ist, ferner daß der elektronische Kreis (3) die Speisung der einzelnen Wicklungsabschnitte in wenigstens zwei gegenüberliegenden Punkten gemäß zwei parallelen und symmetrischen Kreisen für alle Wicklungsabschnitte gewährleistet und dabei eine Rotation der Speisungspunkte der Wicklungsabschnitte auftritt, ferner daß die rotierenden Teile mit dem Induktor (1) und der Antriebswelle (16) drehbar gegenüber dem unbeweglichen Teil mittels Lager (80, 81, 83, 84) gelagert sind, die jeweils in der Nähe der äußeren Enden des Induktors sich befinden, wobei ein Hauptanschlag (85, 86) mit einer dünnen Schicht des Mediums und ein Hilfsanschlag (90, 91, 92, 93, 94) jeweils an einem Ende der Maschine angeordnet sind, wodurch ein Punktkontakt in Richtung der Symmetrieachse der Maschine gebildet wird, und daß jedes Lager (80, 81, 83, 84) eine Lagerschale (80, 84) und einen leicht gewölbten Drehzapfen (81, 83) aufweist, der innerhalb der jeweilgen Lagerschale mit einem gewissen Spiel für die Bildung einer dünnen Schicht des Mediums gelagert ist.

2. Maschine nach Anspruch 1, dadurch gekennzeichnet, daß das Induktionselement durch modulare Elemente (1A, 1B) gebildet wird, welche je nach der gewünschten Leistung auf der Antriebswelle (16) aufgeschoben sind, worauf eine Halterung mittels eins durch Harz (17) gefüllten Rohres (18) erfolgt.

3. Maschine nach Anspruch 1, dadurch gekennzeichnet, daß das Ende des zylindrischen Induktors Verbindungselemente (32A bis 32H) aufweist, welche entlang des Umfangs des Induktors verteilt sind, und daß im Bereich der Verbindungselemente zwei konzentrische Hohlkehlen (65, 64) vorgesehen sind, innerhalb welcher Abdichtungsringe (34, 35) eingesetzt sind, die eine Abdichtung der Verbindungselemente zwischen dem abgedichteten Induktor und dem abgedichteten elektronischen Kreis (3) gewährleisten.

4. Maschine nach Anspruch 3, dadurch gekennzeichnet, daß wenigstens eines der männlichen oder weiblichen Verbindungselemente (32) innerhalb eines deformierbaren Materials (33) derart gelagert ist, daß ein eventuell vorhandenes Spiel oder ein Positionierungsfehler kompensierbar ist.

5. Maschine nach Anspruch 1, dadurch gekennzeichnet, daß einstellbare Mittel (91, 90) vorgesehen sind, welche auf den beweglichen Teil eine Axialkraft ausüben, um im Ruhezustand der Maschine das Gewicht des beweglichen Teils zu kompensieren und einen Kontakt zwischen den Oberflächen des Hauptanschlages (85, 86) zu verhindern.

6. Maschine nach Anspruch 1, dadurch gekennzeichnet, daß der Hauptanschlag (85, 86) aus einem starren und aus einem beweglichen Kranz besteht, wobei diese Kränze gekrümmte Rinnen (850) aufweisen, welche regelmäßig verteilt und derart ausgerichtet sind, daß die Bildung einer dünnen Schicht von Medium gewährleistet ist.

7. Maschine nach einem der vorangegangenen Ansprüche, dadurch gekennzeichnet, daß der Induktor aus einem Stapel von mit entsprechenden Nuten (25) versehenen Blechen (20) mit geringem Verlust besteht, wobei die einzelnen Bleche (20.1, 20N) progressiv und in Bezug auf die Rotation entsprechend einer Schraube versetzt sind, so daß eine Nut eines oberen Bleches (20.1) um einen Winkelbetrag versetzt ist, welche dem Abstand zwischen zwei Nuten in Bezug auf die entsprechende Nut eines unteren Bleches (20.N) des Stapels entspricht.

8. Maschine nach Anspruch 7, dadurch gekennzeichnet, daß die Leiter (58) für die Speisung (58G) und für die Anlaßsteuerung (58H) den Induktor in Richtung der elektronischen Steuerung (3) in zwei verschiedenen Nuten durchqueren, wobei die eine Nut von zwei Leitern (58G) für die Leistungszufuhr durchquert ist, während die andere Nut durch drei Leiter (58H) durchquert ist, die der Zufuhr von Steuerbefehlen und der Sicherheit dienen, und daß der elektronische Kreis (3) in der Nähe jenes Endes angeordnet ist, welches gegenüber dem Ende (166) des Antriebs der Antriebswelle (16) zu liegen gelangt.

9. Maschine nach Anspruch 2, dadurch gekennzeichnet, daß jedes modulare Element aus einem Weicheisenkern (14), zwei Permanentmagnetplatten (12, 13) und zwei Polmassen (10, 11) aus Weicheisen zusammengesetzt ist, wobei auf einer Fläche eine Rinne (110) und auf der gegenüberliegenden Fläche eine Schulter (111) vorgesehen sind, wobei letztere innerhalb der Rinne (110) der jeweils anderen Polmasse (10 bzw. 11) zu liegen gelangt.

10. Maschine nach Anspruch 1, dadurch gekennzeichnet, daß die Lager und Anschläge aus Wolframcarbid bestehen.

FIG.1

FIG.2

FIG.3

FIG.4

FIG.5

FIG.6

FIG.8

FIG.7